(19) Europäisches Patentamt
European Patent Office
Office européen des brevets

(11) Veröffentlichungsnummer: **0 526 805 B1**

(12) **EUROPÄISCHE PATENTSCHRIFT**

(45) Veröffentlichungstag der Patentschrift: **22.11.95**

(51) Int. Cl.⁶: **B65G 53/24**, B65G 53/56, G21C 21/02

(21) Anmeldenummer: **92112541.5**

(22) Anmeldetag: **22.07.92**

---

(54) **Vorrichtung mit Abzweigungen zur Pulverförderung.**

---

(30) Priorität: **05.08.91 DE 4125937**

(43) Veröffentlichungstag der Anmeldung:
**10.02.93 Patentblatt 93/06**

(45) Bekanntmachung des Hinweises auf die
Patenterteilung:
**22.11.95 Patentblatt 95/47**

(84) Benannte Vertragsstaaten:
**BE DE FR GB**

(56) Entgegenhaltungen:
**EP-A- 0 068 115        EP-A- 0 291 890
CH-A- 195 409          DE-A- 3 545 494
DE-B- 2 104 391        DE-C- 332 503**

(73) Patentinhaber: **SIEMENS AKTIENGESELL-
SCHAFT
Wittelsbacherplatz 2
D-80333 München (DE)**

(72) Erfinder: **Adelmann, Manfred
H.v. Brentanostrasse 17
W-6454 Bruchköbel (DE)**
Erfinder: **Heller, Gerhard
kantstrasse 1
W-6450 Hanau (DE)**
Erfinder: **Sandner, Herbert
Höhenstrasse 12
W-6463 Freigericht 5 (DE)**
Erfinder: **Schraudt, Rainer
Unterfeldstrasse 1
W-8751 Kleinwallstadt (DE)**

## Beschreibung

Die Erfindung geht von einer Förderleitung für ein durch einen Fördergasstrom gefördertes Pulver bzw. einer Anlage mit einer derartigen Förderleitung aus und betrifft solche Förderleitungen, in denen Abzweigungen erforderlich sind, um die Pulververförderung in verschiedene Teilleitungen zu leiten.

So ist z.B. aus der DE-C- 33 25 03 eine Förderleitung mit Anschlußelementen bekannt, an die jeweils zwei Teilleitungen und mindestens ein weiterer Leitungszweig angeschlossen ist. Ein derartiges Anschlußelement ist geeignet, einen Abgabebehälter am Vorderende der Förderleitung über den Leitungszweig und die erste Teilleitung mit einem auf niedrigem Druck liegenden Hinterende mit einem Auffangbehälter zu verbinden. Das bekannte Anschlußelement ist als Schieber mit mehreren nebeneinander liegenden Rohrstücken ausgebildet, um die jeweils gewünschten Anschlüsse durch ein entsprechend gebogenes Rohrstück miteinander zu verbinden. Wird ein derartiges Rohrstück aus der Verbindung herausgeschoben, so bleibt es mit dem zuletzt geförderten Pulver gefüllt, das daher eine Verunreinigung darstellt, sobald über diese Verbindung in einem späteren Arbeitsgang ein anderes Pulver gefördert werden soll.

Nach der CH-A- 195 409 wird ein Raum mittels eines ein Filter enthaltendes Umwälzsystems belüftet, wobei ein Mehrwege-Ventil vorgesehen ist, das einen in einer Hahnbuchse drehbar gelagerten Hahnstopfen mit mehreren Hohlräumen aufweist, die durch entsprechende Drehung der Hahnbuchse gestatten, die angesaugte Raumluft ganz oder teilweise durch Frischluft zu ersetzen, die über verschiedene Zuleitungen angesaugt werden kann. Der jeweils in dem Kreislauf eingeschaltete Hohlraum des Hahnstopfens braucht dabei nach einer Drehung des Hahnstopfens nicht gereinigt zu werden.

Eine insbesondere für Kernbrennstoffpulver geeignete Förderanlage ist in der DE-A- 35 45 494 beschrieben, und weist ein Vorderende (z.B. an einem Abgabebehälter) und ein Hinterende (z.B. an einem Auffangbehälter) auf, wobei in das Vorderende und verschiedene Anschlußelemente der Förderleitung eine jeweils abschließbare Fördergas-Zuleitung einmündet. Eine Pumpe erzeugt am Hinterende einen Unterdruck gegenüber dem Vorderende und der Fördergas-Zuleitung, durch den der das Pulver fördernde Fördergasstrom aufrechterhalten wird. Für Kernbrennstoffpulver ist besonders die sogenannte Pfropfenförderung geeignet, bei der in das Vorderende der Förderleitung abwechselnd ein einen Pfropfen bildendes Pulver und ein den Pfropfen treibendes Fördergas-Polster angesaugt wird.

Die Erfindung ist aber nicht nur auf eine Förderleitung für diese Pfropfenförderung gerichtet, sie kann vielmehr auch bei anderen Förderprinzipien, z.B. einer Wirbelbett- oder Fließbettförderung nach dem Staubsaugerprinzip oder bei Verfahren angewendet werden, bei denen das Pulver in Form von Mikrodünen durch die Förderleitung wandert.

In der Auffangstation einer derartigen Förderanlage kann das Pulver auf eine dem jeweiligen Produktionsprogramm entsprechende Weise weiterverarbeitet werden, z.B. gemahlen, gemischt, verpreßt, gesintert werden. Produktionsanlagen für Brennelemente von Kernreaktoren enthalten z.B. derartige Verarbeitungsstationen, wobei bei einem Wechsel des Produktionsprogramms auf andere Pulversorten und gegebenenfalls auch andere Förderwege zwischen den Verarbeitungsstationen übergegangen werden muß.

Für eine derartige Umleitung der Förderströme ist also eine Förderleitung erforderlich mit einer Fördergas-Zuleitung, zwei Teilleitungen, einem weiteren Leitungszweig, wenigstens einem Vorderende und wenigstens einem Hinterende, in dem gegenüber dem Druck am Vorderende und dem Druck in der Fördergas-Zuleitung ein Unterdruck erzeugbar ist, und einem Anschlußelement, das über die erste Teilleitung und den Leitungszweig mit dem Vorderende und Hinterende verbunden ist, und das dazu dient, den Pulverstrom von der ersten Teilleitung auf die zweite Teilleitung umzuleiten. Es handelt sich also um eine "Weiche" für den Fördergasstrom mit dem Pulver. Bleiben in einzelnen Teilen dieser Weiche Reste des zuletzt geförderten Pulvers, so wird dadurch ein anderes Pulver, das in einem späteren Arbeitsgang über die Weiche geleitet wird, so lange verunreinigt, bis das alte Pulver ganz aus den verschiedenen Teilen der Weiche verdrängt ist.

Dieses Problem der Pulverreste ist besonders störend, wenn von Zeit zu Zeit Proben des geförderten Pulvers für eine Qualitätskontrolle und Pulveranalyse aus dem Pulverstrom abgezweigt werden müssen. Es ist daher allgemein üblich, von Zeit zu Zeit statt des ans Hinterende angeschlossenen Auffangbehälters einen entsprechenden Proben-Sammelbehälter anzuschließen, was jedoch eine nachhaltige und unerwünschte Unterbrechung der Pulverförderung bedingt.

Der Erfindung liegt daher die Aufgabe zugrunde, eine Förderanlage zu schaffen, bei der ein Pulverfluß zwischen entsprechenden, ortsfest installierten Verarbeitungsstationen durch ein fest installiertes Leitungssystem problemlos und sauber umgeleitet werden kann.

Die Erfindung geht zur Lösung des Problems davon aus, daß die beiden Teilleitungen, zwischen denen durch alternierendes Desaktivieren einer Teilleitung der Pulverstrom umgeschaltet werden soll, von einem gemeinsamen Verteilerraum ausgehen, in dem sich nach dem Desaktivieren der einen Teilleitung noch störende Pulverreste befinden und der beim Desaktivieren der entsprechenden Teilleitung oder spätestens beim Reaktivieren der Teilleitung entleert wird.

Hierzu kann die andere Teilleitung zur Verfügung stehen, sofern auch dort z.B. eine Sammelkammer für das aus dem Verteilerraum zu entfernende Pulver zur Verfügung steht, es sich also um eine Weiche zwischen zwei Teilleitungen handelt, die zur Abführung des geförderten Pulvers geeignet sind. Handelt es sich um eine Weiche, die beide von Abgabebehältern für das zu fördernde Pulver kommen, so kann der Verteilerraum über den Leitungszweig, der in diesem Fall stets zu einem Auffangbehälter führt, abgeführt werden. Die Reinigung des Verteilerraums erfolgt dabei durch einen pulverfreien Fördergasstrom, der über einen entsprechenden, ein Absperrventil enthaltenden Anschluß in den Verteilerraum eingeleitet wird.

Die Erfindung sei zunächst für den Fall einer Weiche zwischen den zum Hinterende führenden Teilleitungen erläutert. Eine erfindungsgemäße Lösung der gestellten Aufgabe ergibt sich durch eine Förderleitung mit den Merkmalen des Anspruchs 1.

Dabei führt in dem betrachteten Fall die Zweigleitung vom Vorderende zum Anschlußelement, während wenigstens die erste Teilleitung vom Anschlußelement zu dem auf Unterdruck liegenden Hinterende führt und auch die zweite Teilleitung zu einer auf Unterdruck liegenden Sammelkammer führen kann. Im ersten Betriebszustand ist im Anschlußelement die Fördergas-Zuleitung von der zweiten Teilleitung getrennt, während der Anschluß des Leitungszweiges über den Verteilerraum mit der ersten Teilleitung verbunden ist. In diesem Betriebszustand kann also Pulver über den Leitungszweig, den Verteilerraum und die erste Teilleitung zum Hinterende gefördert werden.

Als Ergänzung dieses ersten Betriebszustandes kann vorteilhaft ein wenigstens ein Fördergas-Ventil enthaltender Hilfsanschluß für die Fördergas-Zuleitung vorgesehen sein, wobei die Fördergas-Zuleitung vom Anschluß des Leitungszweiges, dem Verteilerraum und einem Anschluß der ersten Teilleitung durch Schließen des Fördergas-Ventils getrennt ist, um den vom Leitungszweig in die erste Teilleitung fließenden Pulverfluß nicht zu stören. Durch Öffnen des Fördergas-Ventils wird aber die Fördergaszuleitung über den Verteilerraum mit dem Anschluß der ersten Teilleitung verbunden. Diese Maßnahme ist besonders vorteilhaft, wenn der Pulverfluß durch Deaktivieren der ersten Teilleitung unterbrochen und der Verteilerraum von Pulverresten befreit werden soll, die nämlich durch einen über das kurzzeitig geöffnete Fördergas-Ventil eingeleiteten Fördergasstrom aus dem Verteilerraum in die noch offene erste Teilleitung gespült werden. Dabei kann vorteilhaft der Anschluß des Leitungszweiges eine Absperr-Einrichtung aufweisen, um dieses "Freispülen" des Verteilerraums durch das Fördergas des Fördergas-Ventils nicht zu stören.

Im zweiten Betriebszustand des Anschlußelementes ist die erste Teilleitung vom Verteilerraum getrennt (also desaktiviert) und die Fördergas-Zuleitung über den Verteilerraum mit der zweiten Teilleitung verbunden. Dieser Betriebszustand ermöglicht, den Verteilerraum auch dann von Pulverresten freizuspülen, wenn die erste Teilleitung geschlossen ist. Diese Maßnahme ist z.B. vorteilhaft, wenn das im Verteilerraum gesammelte Pulver für eine Pulveranalyse über die zweite Teilleitung entnommen werden soll, wobei auch hier eine Absperr-Einrichtung im Anschluß des Leitungszweiges vorteilhaft sein kann.

Dieser zweite Betriebszustand ist insbesondere im Anschluß an einen weiteren Betriebszustand vorteilhaft, bei dem die Fördergas-Zuleitung über ein Fördergas-Ventil an einem Hilfsanschluß für das Fördergas zunächst geschlossen ist und die Fördergas-Zuleitung vom Anschluß des Leitungszweigs, dem Verteilerraum und der ersten Teilleitung getrennt ist.

In diesem weiteren Betriebszustand verbindet das Anschlußelement die zweite Teilleitung über den Verteilerraum mit dem Anschluß des Leitungszweiges und trennt die erste Teilleitung vom Verteilerraum, so daß ein ungestörter Pulverfluß zwischen Leitungszweig und zweiter Teilleitung möglich ist. Um diesen Pulverfluß durch Desaktivieren der zweiten Teilleitung zu unterbrechen, wird kurzzeitig in den zweiten Betriebszustand übergegangen, bei dem das Fördergas-Ventil geöffnet ist, so daß Pulverreste aus dem Verteilerraum von der zweiten Teilleitung noch vor deren Desaktivierung abtransportiert werden können.

Eine besonders kompakte Anordnung ergibt sich, wenn die beiden Teilleitungen jeweils über direkt am Verteilerraum angeordnete Schließeinrichtungen an dem Verteilerraum anschließbar sind. Das kann z.B. mittels eines hohlen Hahnstopfens erreicht werden, dessen Hohlraum über Auslaßbohrungen an entsprechende Anschlußbohrungen der Teilleitungen anschließbar sind. Der Hilfsanschluß für die Fördergas-Zuleitung mündet dabei direkt in den Hohlraum des Hahnstopfens oder allgemeiner in den Verteilerraum.

Diese Ausführung ist insbesondere für die bereits erwähnte Entnahme von Analysenproben vorteilhaft, die erwähnte Weiche für den Pulverstrom dagegen enthält bevorzugt für jede Teilleitung ein paar hintereinander angeordneter Ventile mit einem dazwischen liegenden Hilfsanschluß für die Fördergas-Zuleitung, wobei die Ventilpaare dazu dienen, die jeweilige Teilleitung in den einzelnen Betriebszuständen mit dem Verteilerraum zu verbinden oder zu trennen, während der Fördergasstrom über den Hilfsanschluß des einen oder anderen Ventilpaares zuführbar ist.

Die geschilderte Förderleitung kann auch als eine durch Fördergas freispülbare Weiche ("Spülweiche") verwendet werden, um Pulver über die beiden Teilleitungen wahlweise aus zwei verschiedenen Abgabebehältern zu entnehmen. Dieser Betriebsfall sei im folgenden an einer Variante der Erfindung erläutert, die die Merkmale des Anspruchs 7 aufweist. Über die erste Teilleitung, das Anschlußelement und den Leitungszweig sind dabei ein Vorderende mit einem Abgabebehälter und ein auf einem niedrigerem Druck liegendes Hinterende mit einem Auffangbehälter verbunden. Das Anschlußelement enthält einen Verteilerraum, der über einen ersten verschließbaren Anschluß mit der ersten Teilleitung, über einen zweiten verschließbaren Anschluß mit der zweiten Teilleitung und über einen weiteren Anschluß mit dem Leitungszweig verbunden ist. Das Anschlußelement weist ferner einen Hilfsanschluß für eine absperrbare Fördergas-Zuleitung auf, wobei über die Fördergas-Zuleitung pulverfreies Fördergas, das verglichen mit dem Druck am Hinterende der Förderleitung einen erhöhten Druck aufweist, in den weiteren Anschluß einleitbar ist. Ist also zunächst der erste Anschluß geschlossen, also ein Pulverstrom aus dem Abgabebehälter am Vorderende unterbunden, weil z.B. über die zweite Teilleitung ein anderes Pulver zum Hinterende geführt wird, so kann der Fall auftreten, daß dieser aus der zweiten Teilleitung kommende Pulverfluß so unterbrochen werden soll, daß anschließend der Verteilerraum dieser Weiche pulverfrei ist und für die Entnahme des Pulvers aus dem an die erste Teilleitung angeschlossenen Abgabebehälter zur Verfügung steht. In diesem Fall wird noch vor dem Öffnene des ersten Anschlusses das Fördergas über die Fördergas-Zuleitung in den Verteilerraum geleitet, um die aus der zweiten Teilleitung strömenden Pulverreste durch den Anschluß der Zweigleitung in das Hinterende zu spülen.

Diese Variante kann ebenso gut auch als Weiche für zwei zu Auffangbehältern führende Teilleitungen verwendet werden, wobei dann die Pulverreste von dem Fördergas in die zweite Teilleitung ableitbar sind, und damit der Verteilerraum freigespült ist und für ein späteres Aktivieren der ersten Teilleitung (d.h. Öffnen des ersten Anschlusses) zur Verfügung steht. Auch hier ergeben sich weitere vorteilhafte Möglichkeiten, die weitgehend den bereits im Anschluß an den Anspruch 1 besprochenen Varianten entsprechen.

Diese und weitere vorteilhafte Ausbildungen der Erfindung sind in den Unteransprüchen gekennzeichnet und anhand von acht Figuren näher erläutert.

Figur 1 das Prinzip einer Fördereinrichtung, die den Bedürfnissen der Pulververarbeitung bei der Herstellung von Kernreaktor-Brennelementen angepaßt ist;

Figur 2 eine vorteilhafte Weiterbildung des Prinzips der Figur 1 mit einem Anschlußelement zur Probenanalyse und einem Anschlußelement, das zwei Auffangstationen anzuschließen gestattet;

Figur 3 eine ähnliche Vorrichtung mit Anschlußelementen zur Probenanalyse und für zwei Abgabestationen;

Figur 4 ein den Figuren 2 und 3 entsprechendes Anschlußelement zum Anschließen zweier Abgabestationen oder zweier Auffangstationen;

Figur 5 eine Weiterbildung der Figur 4; und Figuren 6 bis 8 praktische Realisierungen der Anschlußelemente.

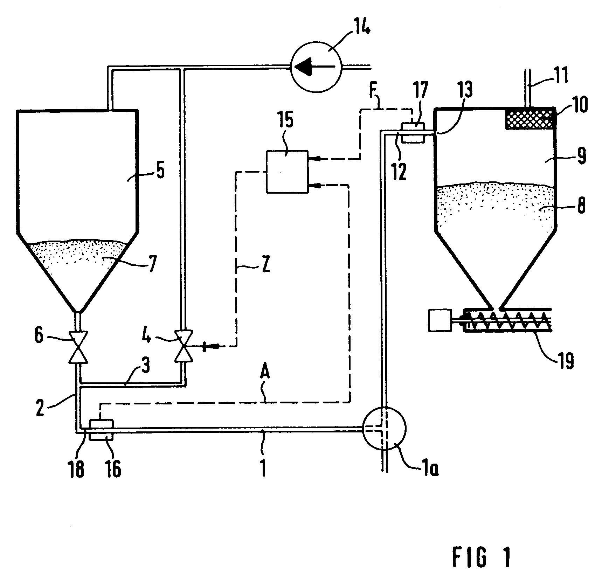

Beim Ausführungsbeispiel nach Figur 1 ist im linken Teil die Abgabestation angeordnet, die über die Förderleitung 1 mit der Auffangstation im rechten Teil der Figur verbunden ist. Das Vorderende 2 der Leitung, in das eine Fördergaszuleitung 3 mit einem Absperrventil 4 mündet, dient als Ansaugraum, in den bei geöffnetem Ventil 4 und entsprechender Druckdifferenz Fördergas einströmt, während bei geschlossenem Ventil 4 das Pulver 7 aus einem Abgabebehälter 5 und eine geöffnete Pulversperre 6 eintritt und das Vorderende 2 der Förderleitung füllt. Das geförderte Pulver 8 wird in der Sammelkammer 9 aufgefangen, die an einem oberen Teil eine ein Pulverfilter 10 enthaltende Gas-Ableitung 11 und einen an ein Hinterende 12 der Förderleitung 1 angeschlossenen Einlaß 13 auf weist.

Eine Pumpe 14 erzeugt eine Druckdifferenz DP = P(A)- P(F) zwischen dem Druck P(A) am Absperrventil der Fördergaszuleitung und dem Druck P(F) in der Sammelkammer, wobei beim Ausführungsbeispiel der Figur 1 die Pumpe 14 z.B. ein Kompressor sein kann, dessen Druckleitung sowohl in den Abgabebehälter 5 als auch zum Absperrventil 4 führt und dort jeweils einen Überdruck erzeugt und aufrecht erhält. Die Öffnung am Boden des Abgabebehälters, über die der Ansaugraum 2 mit Pulver gefüllt wird, ist dabei zwar stets mit Pulver gefüllt, da aber bei geöffnetem Ventil 4 ein Überdruck auf der Fördergaszuleitung herrscht, ist die Pulverzufuhr auch bei geöffneter Pulversperre 6 praktisch unterbrochen, so daß diese Pulver-Einfüllöffnung automatisch sperrt. Bei gesperrtem Fördergasventil 4 ist dagegen ein ordnungsgemäßes Füllen des Ansaugraumes sichergestellt.

Das Absperrventil 4 wird mittels eines Steuersignales Z aus einer Steuereinrichtung 15 betätigt, die mit Mitteln zusammenarbeitet, die das Füllen des Ansaugraumes überwachen und den Durchtritt von gefördertem Pulver durch den Durchlaß 13 zur Sammelkammer melden. Diese Mittel können z.B. aus kapazitiven Meßgliedern 16 und 17 bestehen, deren Ausgangssignal A überwacht, daß sich am hat, während das Ausgangssignal F angibt, ob ein Pfropfen das Hinterende 12 der Förderleitung erreicht.

Durch dieses Überwachungs- und Meldesignal, das der Steuereinrichtung zugeführt ist, wird die Fördergaszuleitung jeweils solange offen gehalten, bis das den Pfropfen bildende Pulver durch den Einlaß durchgetreten ist.

Das zum Fördern des Pulvers benutzte Fördergas wird aus der Sammelkammer 9 über das Pulverfilter abgeführt, während die Druckdifferenz durch die Pumpe 14 erreicht wird, die vorteilhaft auch bei geschlossener Fördergaszuleitung weiterläuft. Die Pumpe kann jedoch zum Unterbrechen des Förderns, insbesondere bei Verfahrensstörungen oder bei Erreichen eines vorgegebenen Füllstandes in der Sammelkammer 9 stillgesetzt werden.

Für die Weiterverarbeitung des geförderten Pulvers kann die Sammelkammer 9 kontinuierlich geleert werden, was durch eine entsprechende Förderschnecke 19 in Figur 1 dargestellt ist. Trotzdem kann es erforderlich sein, gelegentlich das Fördern zu unterbrechen, um das Pulverfilter 10 zu entleeren oder Betriebsstörungen, z. B. Verstopfungen der Förderleitungen oder Überfüllungen der Sammelkammer, zu beseitigen. Bei solchen Unterbrechungen wird vorzugsweise die Pumpe 14 stillgesetzt.

Ferner ist mit 1a schematisch eine Abzweigung gezeigt, mit der z. B. Pulverproben entnommen oder andere Abgabe- oder Auffangstationen an die Förderleitung angeschlossen werden können.

Das Ausführungsbeispiel der Figur 1 arbeitet mit einem Überdruck in dem Abgabebehälter der Förderleitung und der Sammelkammer, der sowohl zum Füllen des Ansaugraumes 2 wie zum Fördern des Pulvers benutzt wird. Da also bei Undichtigkeiten Pulver austreten kann, kann es bei radioaktiven Materialien zu Sicherheitsproblemen kommen.

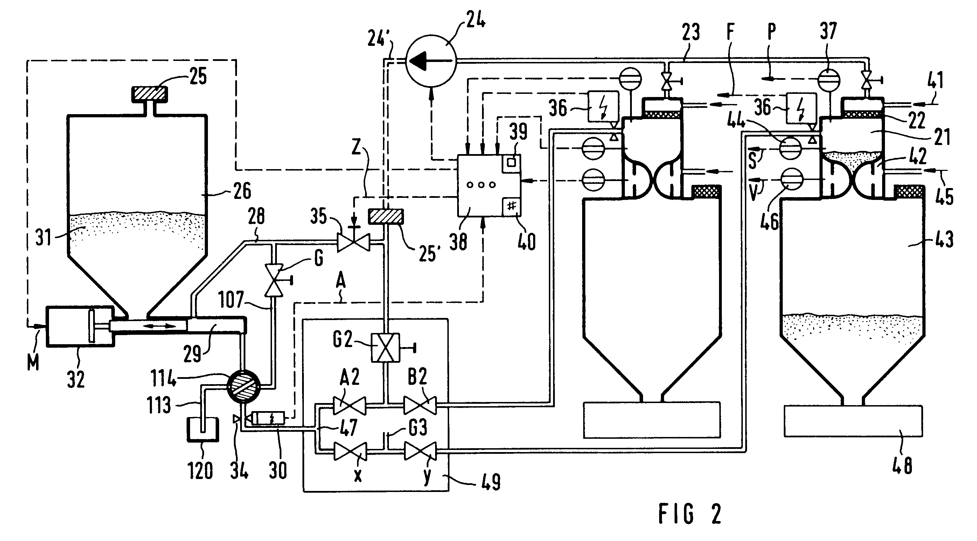

Figur 2 zeigt, daß eine Sammelkammer 21 über ein Pulverfilter 22 und eine Saugleitung 23 zur Pumpe 24 abgesaugt wird. Mit unterbrochenen Linien 24' ist dargestellt, daß durch Rückführen ein Kreislauf für das Fördergas entsteht, wobei die Pumpe 24 als Saugpumpe arbeitet. Ein Frischluftfilter 25 am Abgabebehälter 26 und ein Konstantdruck-Ventil 25' an der Leitung zum Fördergasventil sorgen dort dafür, daß der Druck im Abgabebehälter und auch in der Fördergaszuleitung 28 dem Umgebungsdruck in der Abgabestation entspricht.

Um einen Pulverpfropfen im Ansaugraum 29 am Vorderende der Förderleitung 30 zu erzeugen, wird das Pulver beim Ausführungsbeispiel der Figur 2 am Boden des das Pulver 31 enthaltenden Abgabebehälters 26 mechanisch entnommen, z.B. mittels eines Motors 32 und eines Schiebers, der das Pulver, das am Boden des Abgabebehälters 31 zunächst durch das Gewicht der Pulverfüllung zusammengepreßt ist und zu einer gewissen Klumpenbildung neigt, in den Ansaugraum 29 transportiert. Dieser Raum ist vom Gewicht der Pulverfüllung 31 entlastet. In ihn münden sowohl die Förderleitung als auch, vorzugsweise von oben, die Fördergaszuleitung 28. Ein derartiger Schieber unterbricht das Einfüllen des Pulvers in den Ansaugraum, sobald er stillgesetzt ist und kann daher - ähnlich wie dies bei Figur 1 beschrieben ist - die Pulver-Einfüllöffnung zum Ansaugraum versperren. Auch der Druck im Abgabebehälter 26 ist dadurch praktisch vom Druck in der Förderleitung und der Fördergaszuleitung entkoppelt und entspricht dem Atmosphärendruck der Abgabestation.

Eine Lichtschranke 34 gibt das Überwachungssignal A ab, wenn ausreichend Pulver den Ansaugraum füllt, so daß nun durch das Steuersignal Z das Fördergasventil 35 in der Fördergaszuleitung 28 geöffnet wird. Diese Lichtschranke ist am Vorderende der Förderleitung verschiebbar und gibt an, wie weit beim Ansaugtakt das Pulver in die Förderleitung angesaugt werden soll.

Ebenso gibt eine Lichtschranke 36 das Meldesignal F ab, sobald zu förderndes Pulver durch das Hinterende der Fördergaszuleitung hindurchgefördert ist. Dann wird über das Steuersignal Z das Fördergasventil in der Fördergaszuleitung wieder gesperrt.

Ferner ist vorgesehen, den Druck in der Sammelkammer 21 über einen entsprechenden Druckmesser 37 zu messen und ein entsprechendes Meßsignal P zu bilden. Dieses Meßsignal kann einerseits der Steuereinrichtung 38 zugeführt werden, andererseits zusammen mit den Überwachungs- und Meldesignalen A und F und/oder dem daraus gebildeten Steuersignal z einer optischen Anzeige 39 zugeführt werden, die (gegebenenfalls mit weiteren Zustandssignalen) den Betriebszustand der Anlage anzeigt. Vorteilhaft wird zumindest das Meßsignal und das Steuersignal fortlaufend in einen Speicher 40 eingelesen, in dem die eingelesenen Daten jeweils für eine vorgegebene Mindestzeit gespeichert werden, wobei diese Mindestzeit bei stillgesetztem Verfahren verlängert wird. Dadurch ist es möglich, bei Störungen des Betriebes die entsprechenden Betriebszustandsdaten auszulesen und die Vorgeschichte der Störung zurückzuverfolgen, wie dies z.B. bei Flugschreibern von Flugzeugen üblich ist.

Ist die Förderleitung 30 verstopft, so erzeugt die Pumpe 24 einen wachsenden Unterdruck in der Sammelkammer 21. Unterschreitet daher der Druck in der Sammelkammer 21 eine vorgegebene Untergrenze, so setzt vorteilhaft die Steuereinrichtung 38 das Verfahren still und die Pumpe 24 wird geflutet, so daß zumindest der Druck in der Fördergasleitung und der Sammelkammer dem Druck in der Fördergaszuleitung angeglichen wird. Sollten sich in der Förderleitung durch Ansammlung von Pulver Verstopfungen gebildet haben, so werden diese bei der Entspannung des Druckes in der Förderleitung aufgelöst, so daß beim anschließenden Wieder-Anlassen der Pumpe 24 die Leitung durch erneut angesaugtes Fördergas freigespült wird.

Insbesondere können derartige Unterbrechungen der Pulverförderung von Zeit zu Zeit vorgesehen sein, um das Pulverfilter 22, über das das durch die Förderleitung in den Sammelbehälter eingeströmte Fördergas aus der Sammelkammer 21 entfernt wird, in umgekehrter Richtung mit Druckgas zu durchspülen, wie durch den Pfeil 41 angedeutet ist.

Gemäß Figur 2 wird das Pulver beim Fördern durch das Hinterende der Förderleitung 30 hindurch in einen oberen Teil der Sammelkammer 21 geleitet. Es sammelt sich daher am Boden dieser Sammelkammer, an dem ein Pulverdurchlaßventil 42 angeordnet ist. Dieses Ventil trennt die Sammelkammer 21 von einer darunterliegenden Auffangkammer 43 und ist während des Förderers geschlossen gehalten. Ein Füllstandsanzeiger 44, der z.B. optisch oder kapazitiv arbeiten kann, erzeugt ein Füllstandssignal S, wenn in der Sammelkammer 21 ein vorgegebener Füllstand erreicht ist. Die Steuereinrichtung 38 unterbricht dann das Fördern (Abschalten der Saugpumpe 23) und öffnet das Pulverdurchlaßventil 42, so daß das in der Sammelkammer 21 enthaltene Pulver durch seine eigene Schwerkraft in die Auffangkammer 43 befördert wird.

Vorteilhaft wird das Pulverdurchlaßventil 42 mit Druckgas gesperrt, was durch den Pfeil 45 angedeutet ist. Ein derartiges druckgasbetätigtes Ventil ist aus der DE-OS 35 45 494 bekannt. Zum Öffnen des Pulverdurchlaßventils 42 wird das darin enthaltene Druckgas vorteilhaft verwendet, um gemäß dem Pfeil 41 das Pulverventil 22 zu spülen. Zur Steuerung dieses Vorganges ist ein Manometer 46 vorgesehen, aus dessen Druckmeßwert ein Ventilzustandssignal V für die Steuereinrichtung 38 gebildet wird. Die weitere Verarbeitung des geförderten Pulvers ist durch eine entsprechende Einrichtung 48 (z. B. eine zu einer Pulverpresse führende Förderschnecke) angedeutet.

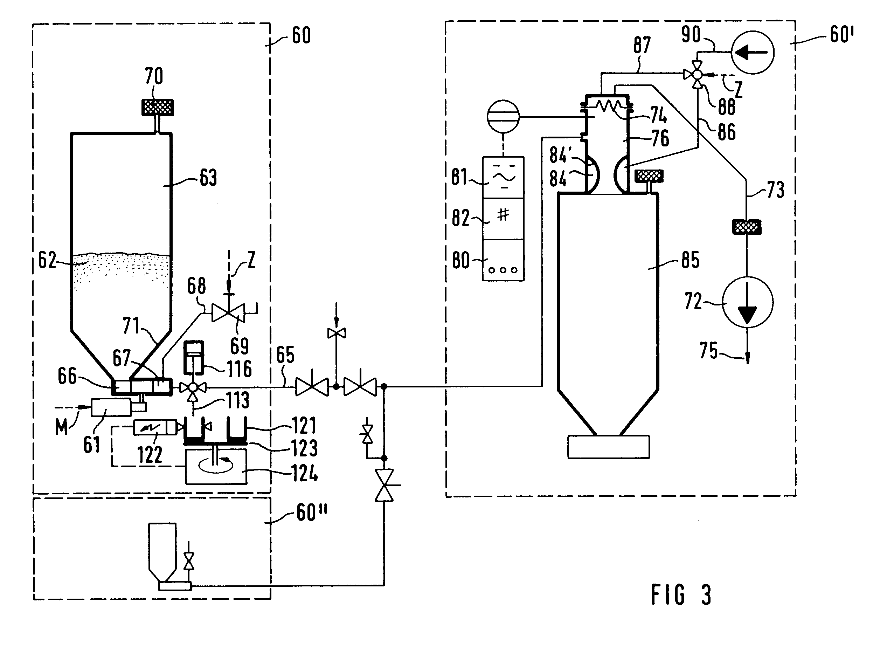

Ferner zeigen Figuren 2 und 3 eine Abzweigung ("Anschlußelement") mit einer Zweigleitung, bei der die von der Abzweigung abgehenden Leitungsteile durch eine Sperreinrichtung (z.B. eine Ventilanordnung 49) gestattet würden, z.B. statt des Pulvers aus einer Abgabestation ein anderes Pulver aus einer anderen Abgabestation in die Sammelkammer zu leiten. Hier ist die Abzweigung 47 verwendet, um das Pulver 31 statt in die Sammelkammer 21 in die Sammelkammer einer anderen Auffangstation zu lenken. Ferner sind Abzweigungen auch vorteilhaft, wenn zur Qualitätskontrolle von Zeit zu Zeit Proben aus dem geförderten Pulver entnommen und zur weiteren Analyse einem Probebehälter zugeführt werden sollen.

Einen Parallelbetrieb zweier im wesentlichen identischer Stationen mit gemeinsamer Gegenstation zeigt auch Figur 3, bei der die Stationen jeweils in einem Handschuhkasten 60, 60', 60'' angeordnet sind. Insbesondere kann aber statt der zweiten Auffangstation auch nur eine zweite Sammelkammer in der Auffangstation 60' vorgesehen sein, wobei beide Sammelkammern zur Beschleunigung des Transports auf einen gemeinsamen Auffangbehälter arbeiten können. Ein geeignetes Mittel, das das Füllen des Ansaugraumes 67 sicherstellt, ist dabei ein Motor 61 als mechanischer Antrieb beweglicher Teile.

Diese Teile transportieren Pulver vom Boden eines die Pulverfüllung 62 enthaltenden Abgabebehälters 63 zum Vorderende einer Förderleitung 65, die in diesem Falle doppelt ausgebildet ist und zu zwei Abgabestationen führt.

Insbesondere können die mechanisch bewegten Teile ein Flügelrad enthalten, dessen Flügel am Boden des Abgabebehälters 63 nach oben offene Zwischenräume bilden, in die das Pulver 62 aufgrund seines Eigengewichtes hineingedrückt wird. Der Motor 61, dessen Getriebe an eine Antriebswelle des Flügelrades ankuppelbar ist, bewegt das Flügelrad und die von den Flügeln gebildeten, mit Pulver gefüllten Räume in den Ansaugraum 67, in den eine Fördergaszuleitung 68 mit einem absperrbaren Fördergasventil 69 einmündet. Vorteilhaft ist die Fördergaszuleitung 68 über das Ventil 69 zur Atmosphäre im Handschuhkasten 60 (Abgabestation) offen. Ist das Fördergasventil 69 während der Rotation des Flügelgrades 66 geschlossen, so liegt der Druck der Förderleitung 65 auch am Ansaugraum 67 an. Der Abgabebehälter 63 ist zur Umgebungs-Atmosphäre in der Abgabestation hin offen, wozu ein Frischgasfilter 70 im oberen Teil des Abgabebehälters vorgesehen ist. Dadurch ergibt sich am Vorderende der Förderleitung 65 ein Unterdruck, durch den das Pulver pfropfenförmig in dieses Vorderende hineingesaugt wird. Die Pfropfenbildung findet also nur statt, solange an der Leitung 65 Unterdruck anliegt. Dies ist im Hinblick auf die Betriebssicherheit vorteilhaft.

Das Flügelrad 66 arbeitet dabei als eine Art "Pulverfräse", die jeweils die unterste, am Boden des Abgabebehälters 63 liegende Pulverschicht abfräst und in den Ansaugraum 67 befördert, der durch eine Abdeckung oder Wand 71 vom Eigengewicht der Pulverfüllung 62 entlastet ist. Sollte dieses Eigengewicht daher in der Pulverfüllung zu Klumpen oder Pulverbrücken führen, so werden diese durch die Fräse aufgebrochen ohne sich in dem vom Druck entlasteten Raum 67 neu bilden zu können.

In der Auffangstation (Handschuhkasten 60') ist eine Pumpe 72 vorgesehen, die mit einer Saugleitung 73 an die Abgabeseite eines Pulverfilters 74 angeschlossen ist. Der Auslaß 75 der Pumpe 72 ist vorteilhaft zur Atmosphäre der Auffangstation hin offen, wobei das ausgestoßene Gas der Pumpe 72 über eine die Förderleitung 65 umgebende Schutzhülle in die Atmosphäre der Abgabestation 60 zurückgeführt werden kann. Das Pulverfilter 74 kann insbesondere aus einem mehrschichtigen Gewebe gefertigt und topfartig in das Innere der Sammelkammer ragen. Bevorzugt weist dieser Filtertopf einen mehrfach gefalteten Boden auf, während der Topfrand mittels dauerelastischen Kunststoff (z.B. zweikomponentiger Silikonkautschuk) zu einem Flansch vergossen sein kann, der in die Seitenwand einer Sammelkammer 76 eingepaßt ist.

Mit 80 ist eine Steuereinrichtung bezeichnet, die jeweils beim Öffnen des Ventils 69 in der Fördergaszuleitung 68 den Motor 61 stillsetzt und damit den Transport von Pulver aus dem Abgabebehälter 63 in den Ansaugraum 64 bzw. das Vorderende der Förderleitung 65 sperrt und umgekehrt durch Sperren der Fördergaszuleitung während des Pulvertransports aus dem Abgabebehälter 63 das Ansaugen des Pulvers und die Pfropfenbildung am Vorderende der Förderleitung ermöglicht.

Nicht dargestellt ist eine Überwachungs- und Meldeeinrichtung, die die Pfropfenbildung am Vorderende der Förderleitung 65 und den Durchtritt von Pulver durch den an die Förderleitung 65 angeschlossenen Einlaß 81 in die Sammelkammer 78 überwacht und meldet. Hierzu können kapazitive oder optische Melder an den entsprechenden Stellen der Förderleitung vorgesehen sein, insbesondere kann es aber auch ausreichen, hierzu einen Druckmesser für den Innendruck der Sammelkammer 78 zu verwenden.

Die Steuereinrichtung 80 kann insbesondere in ein Bedienungspult integriert sein, das auch eine optische Anzeige 81 enthalten kann, die mit den Signalen der entsprechenden Überwachungs- und Meldeeinrichtungen gesteuert wird und den momentanen Betriebszustand der Anlage anzeigt. Um bei Betriebsstörungen deren Ursachen erkennen zu können, kann ein Betriebszustandsspeicher 82 vorgesehen sein, der zumindest für eine vorgegebene Zeit die Betriebsdaten der Vorrichtung, insbesondere also die Überwachungs- und Meldesignale sowie die Steuersignale, speichert und sie im Fall eines ungestörten Betriebes nach der vorgegebenen Mindestzeit wieder löscht, bei Betriebsstörungen aber über diese Zeit hinaus gespeichert und für ein späteres Auslesen und Kontrollieren bereit hält.

Aus Gründen der Übersichtlichkeit sind in Figur 3 die Meßglieder (insbesondere ein Druckmesser in der Abgabestation, der den Druck in der Sammelkammer mißt und dessen Signal dem Anzeigegerät 81 und/oder dem Steuergerät 80 zugeführt ist) weggelassen. Weitere vorteilhafte Meßgeräte können zum Beispiel die Saugleistung der Pumpe 72 und/oder den Druckabfall am Pulverfilter 74 messen. Ein hoher Druckabfall am Pulverfilter 74 zeigt dessen Verstopfung an, und ebenso ist das Pulverfilter 74 oder die Förderleitung 65 verstopft, wenn von der Pumpe 72 nur wenig Fördergas aus der Sammelkammer 78 abgesaugt werden kann. Derartige Verstopfungszustände lösen sich meist durch Fluten der Vorrichtung wie es auch für das regelmäßige Entleeren der Sammelkammer 78 vorgesehen ist, die an ihrem Boden mittels eines Pulverdurchlaßventils 84 gegenüber einer unter ihr angeordneten Auffangkammer 85 druckdicht verschlossen und an der zum Beispiel ein Füllstandsmesser angeordnet ist.

Das Pulverdurchlaßventil kann von einer am Boden rings um die Sammelkammer herumlaufenden Membran 85 gebildet sein, die mittels Druckgas aus einer Druckgasleitung 86 soweit zusammengedrückt werden kann, daß sie den Pulverdurchlaß am Boden der Sammelkammer 78 vakuumdicht verschließt. Auch an der Unterdruckseite (Abgabeseite) des Pulverfilters 74 kann eine Druckgaszuführung 87 vorgesehen sein, wobei ein Mehrwegeventil 88 durch das Steuersignal Y und ein entsprechendes Stellglied so betätigt wird, daß entweder die Druckgasleitung 86 des Pulverdurchlaßventils 84 mit einer Druckgasleitung 90 verbunden ist (dann ist das Pulverdurchlaßventil 84 durch den Druck an der Leitung 90 zusammengedrückt und gesperrt), oder die Druckgasleitung 86 zum Pulverdurchlaßventil ist mit der Druckgaszuführung 87 zum Pulverfilter 74 verbunden, so daß das Druckgas nunmehr aus dem Pulverdurchlaßventil 84 heraus, über das Ventil 88 und durch das Pulverfilter 74 in die Sammelkammer 76 strömt.

Dadurch wird nicht nur die Sammelkammer geflutet, sondern gleichzeitig das Pulverventil 74 von angesaugtem Pulver befreit. Eine direkte Verbindung der Druckgasleitung 90 zur Druckgaszuführung 87 ist beim Dreiwegeventil 88 nicht vorgesehen. Ist vielmehr z.B. im Fall einer Verstopfung eine größere Gasmenge zum Fluten von Sammelkammer und Förderleitung nötig, so wird ihr Druckgas dadurch dosiert zugeführt, indem die Druckgasleitung 86 mehrmals hintereinander das Ventil 84 geschlossen und wieder durch das Filter 74 in die Sammelkammer entleert wird.

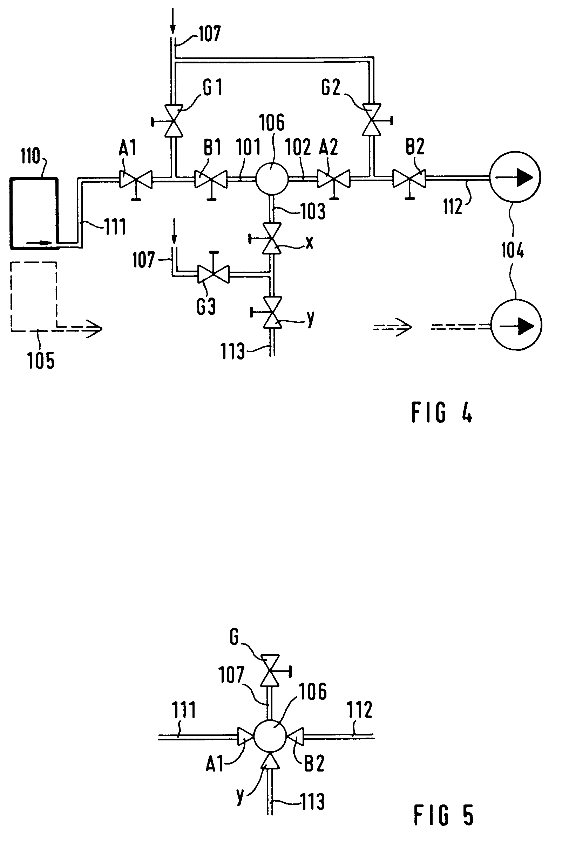

Figur 4 zeigt ein symmetrisch aufgebautes Anschlußelement, an dem verschiedene Varianten der Erfindung erläutert werden sollen.

Zunächst sei eine Spülweiche zwischen zwei Abgabestationen betrachtet. In einen Auffangbehälter am Hinterende der Förderleitung wird Pulver durch einen Unterdruck angesaugt, der z. B. mittels einer an der Sammelkammer des Auffangbehälters angeordneten Pumpe 104 erzeugt wird. Dazu sei ein aktueller Arbeitsgang vorgesehen, bei dem das Pulver aus einem im wesentlichen auf Atmosphärendruck stehenden Abgabebehälter 110 am Vorderende der Leitung entnommen wird, wobei aber für einen späteren Arbeitsgang ein mit einem anderen Pulver gefüllter weiterer Abgabebehälter 105 am Vorderende zur Verfügung steht.

Die Förderleitung enthält nach der Erfindung ein Anschlußelement mit einem Verteilerraum 106, einen z. B. über das Ventil A1 verschließbaren ersten Anschluß für die erste Teilleitung 111, einen zweiten, z. B. über das Ventil y verschließbaren Anschluß für die zweite Teilleitung 113, die in diesem Fall zum Abgabebehälter 105 führt, einen weiteren Anschluß 102 für den Leitungszweig 112, sowie einen Hilfsanschluß 107, der absperrbar ist und in diesem Fall über die beiden Ventile G1 und G3 über getrennte Gaseinleitungen an die dem Verteilerraum 106 zugewandte Seite der Ventile A1 und y führt. Mit diesem absperrbaren Hilfsanschluß 107 ist eine im wesentlichen auf Atmosphärendruck stehende, pulverfreie Fördergas-Zuleitung verbunden. Die aus Symmetriegründen gezeigte Fördergas-Einleitung über das Ventil G2 sowie weitere in Figur 4 gezeigte Ventile seien zunächst nicht vorhanden.

Im betrachteten Fall führen also die beiden Teilleitungen 111, 113 zu Abgabebehältern 105, 110 am Vorderende, wobei das Ventil y die zweite Teilleitung 113 geschlossen hält, und der Verteilerraum 106 mit den Anschlußstutzen 101, 102 und 103 füllt sich mit Pulver, das über das offene Ventil A1 aus dem Abgabebehälter 110 angesaugt wird. Wird das Ventil A1 geschlossen, um später durch Öffnen eines der Ventile A1, y ein anderes Pulver über das Anschlußelement zu leiten, so würde dieses neue Pulver durch Pulverreste im Anschlußelement verunreinigt. Zwar ist am Vorderende der Förderleitung in der Regel bereits eine absperrbare Fördergaszufuhr vorgesehen (z. B. Position 28 in Figur 2, Position 67 in Figur 3), aber ein durch das Forderende eingeleitetes Fördergas könnte allenfalls in direktem Durchgang reinigen, jedoch würde der Anschlußstutzen 103 und Teile des Verteilerraumes 106 nicht ausreichend freigespült.

Die Erfindung sieht daher allgemein vor, beim Schließen des einen Anschlusses (oder jedenfalls vor dem nächsten Arbeitsgang) über den anderen Anschluß, also das Ventil G3, Fördergas aus der Fördergas-Zuleitung in den Verteilerraum einzuleiten. Im betrachteten Fall wird also der Anschlußstutzen 103 und der Verteilerraum 106 freigespült, wobei das Pulver über den Leitungszweig 112 abgeführt wird. Dieses Freispülen der Weiche wird noch verbessert, wenn gleichzeitig das Fördergas-Ventil G1 kurzzeitig geöffnet wird.

Die den Ventilen A1 und y strömungsmäßig nachgeschalteten Ventile B1 und x sind vorteilhaft, um bei einer stillgelegten Teilleitung über die Fördergas-Ventile G1 und G3 die jeweils stillgelegte Teilleitung zu belüften (z. B. B1 geschlossen, G1, A1 geöffnet).

Soll das Anschlußelement als Weiche zwischen zwei Leitungsteilen dienen, über die das Pulver zum Hinterende abgeführt werden soll, so übernimmt der Leitungsteil 111 die Rolle des Leitungszweiges, der über den Verteilerraum 106 mit einer der beiden Teilleitungen 112 und 113 angeschlossen ist, die jeweils zu einem Auffangbehälter (oder bei einem Parallelbetrieb der beiden Leitungen wenigstens jeweils zu einer Sammelkammer eines gemeinsamen Auffangbehälters) am Hinterende führen.

In diesem Fall ist also die erste Teilleitung 112 am ersten Anschluß 102 über das Ventil B2 und die zweite Teilleitung 113 am Anschluß 103 über das Ventil y an den Verteilerraum 106 anschließbar.

Auch hier füllt ein Pulver, das in einem aktuellen Arbeitsgang über den Leitungszweig 111, den Verteilerraum 106 und die erste Teilleitung 112 gefördert wird, den Verteilerraum 106 und den Anschluß 103 und muß beim Schließen der Teilleitung 112 entfernt werden, um Verunreinigungen eines in einem späteren Arbeitsgang über das Anschlußelement zu leitenden Pulvers zu vermeiden.

Hier sieht die Erfindung vor, unmittelbar bevor die Teilleitung 112 über das Ventil B2 geschlossen wird, Fördergas über die Fördergaszuleitung (Ventil G3) und den Anschluß der anderen Teilleitung 113 in den Verteilerraum einzuleiten. Damit ist das Verzweigungselement gereinigt, bevor durch Öffnen des Ventils y der zweite Anschluß für die zweite Teilleitung 113 geöffnet wird, um in einem späteren Arbeitsgang Pulver über diese zweite Teilleitung zu fördern.

Dann füllt sich Verteilerraum 106 und erster Anschluß 102 wieder mit einem Pulver, das vor einem Arbeitsgang, bei dem die erste Teilleitung 112 über das Ventil B2 geöffnet werden soll, entfernt werden muß. Daher wird noch in dem Betriebszustand, in dem die zweite Teilleitung 113 über das Ventil y an den Verteilerraum 106 angeschlossen und die erste Teilleitung über das Ventil B2 von dem Leitungszweig 111, der Fördergas-Zuleitung G2, G3 und der zweiten Teilleitung 113 getrennt ist, über den Anschluß 102 der ersten Teilleitung und das Ventil G2 Fördergas aus der Fördergas-Zuleitung in den Verteilerraum 106 geleitet, so daß die Leitungsteile 102, 106 und 103 freigespült werden.

Da dabei ein Druckunterschied zwischen dem Abgabebehälter 110 und dem Verteilerraum 106 abgebaut wird, fließt hierbei kein weiteres Pulver aus dem Leitungszweig 111 nach, was durch Sperren des Anschlusses 101 (Ventil B1) zusätzlich sichergestellt werden kann. Da am Vorderende der Förderleitung, die bereits erwähnt wurde, ohnehin eine Fördergaszufuhr und Sperreinrichtungen vorgesehen sind, die ein Freispülen des Leitungszweiges 111 und des entsprechenden weiteren Anschlusses 101 ermöglichen, sind die Ventile A1, B1, G1 der Figur 10 in vielen Fällen nicht erforderlich und in Figur 2 weggelassen. Auch hier sind die zusätzlichen Ventile A2 und x vorteilhaft, da sie bei einer stillgelegten Teilleitung geschlossen werden können, um über das entsprechende Fördergasventil und Öffnen des strömungsmäßig nachgeschalteten Ventils die Teilleitung zu fluten.

Können die Anschlußstutzen in den Anschlüssen 101, 102, 103 so kurz gebaut werden, daß sie praktisch kein störendes Pulver speichern können, so werden die Ventile A2, B1, x funktionslos und die Ventile G1, G2, G3 können durch ein einziges Ventil G ersetzt werden. Dies zeigt Figur 5, wo die Anschlüsse der beiden Teilleitungen und des Leitungszweiges mit den entsprechenden Ventilen A1, B2, y direkt am Verteilerraum 106 angeordnet sind und der Hilfsanschluß für die Fördergas-Zuleitung 107 mit dem entsprechenden Fördergas-Ventil G diret in den Verteilerraum mündet.

Daher kann als Anschlußelement eine Hahnbuchse verwendet werden, die anstelle der Ventile A1, B2 und y Anschlußbohrungen für die Teilleitungen und den Leitungszweig aufweist und in der ein Hahnstopfen drehbar gelagert ist, der einen den Verteilerraum 106 bildenden Hohlraum aufweist.

Bei derartigen, handelsüblichen Hähnen, die als Dreiwege- oder Mehrwege-Ventile ausgebildet sind, liegen die Ventilanschlüsse in einer Ebene und die Ventilwirkung wird erreicht, indem entsprechende Bohrungen im drehbaren Hahnstopfen die Anschlußbohrungen freigeben oder verschließen. Wird ein derartiges Ventil erfindungsgemäß benutzt, so kann die Fördergas-Zuleitung 107 mit einem eigenen Ventil G ausgestattet und senkrecht zur Anschlußebene koaxial zur Drehachse des Hahnes in den Hohlraum führen.

Da zur Analyse des geförderten Pulvers nur kleine Mengen nötig sind und durch diese Probenentnahme der Pulverfluß zwischen dem Vorderende und dem Hinterende der Förderleitung möglichst nicht unterbrochen werden soll, genügt es, während der Pulverförderung nur jeweils soviel Pulver zu entnehmen, wie der Verteilerraum 106 fassen kann. Es muß also nur von Zeit zu Zeit die Verbindung zwischen dem Vorderende und dem Hinterende, also dem Leitungszweig 111 und der ersten Teilleitung 112, unterbrochen werden, um den Verteilerraum 106 durch Einleiten von Fördergas aus der Zuleitung 107 in die zweite Teilleitung 113 zu entleeren. Die normale Förderung geschieht also durch einen Betriebszustand, bei dem die Fördergasleitung 107 und die zweite Teilleitung 113 von den Anschlüssen 111 und 112 getrennt sind, während die Probenentnahmen durch einen Betriebszustand geschieht, bei dem die Anschlüsse des Leitungszweiges 111 und der Zweigleitung 112 geschlossen und der Hilfsanschluß für die Fördergasleitung 107 über den Verteilerraum 106 mit dem Anschluß der zweiten Teilleitung 113 verbunden ist.

Werden dabei alle vier Anschlüsse in eine Ebene gelegt, so kann der Verteilerraum als Durchtrittskanal im drehbaren Hahnküken ausgebildet werden und ein eigenes Fördergas Ventil G entfallen.

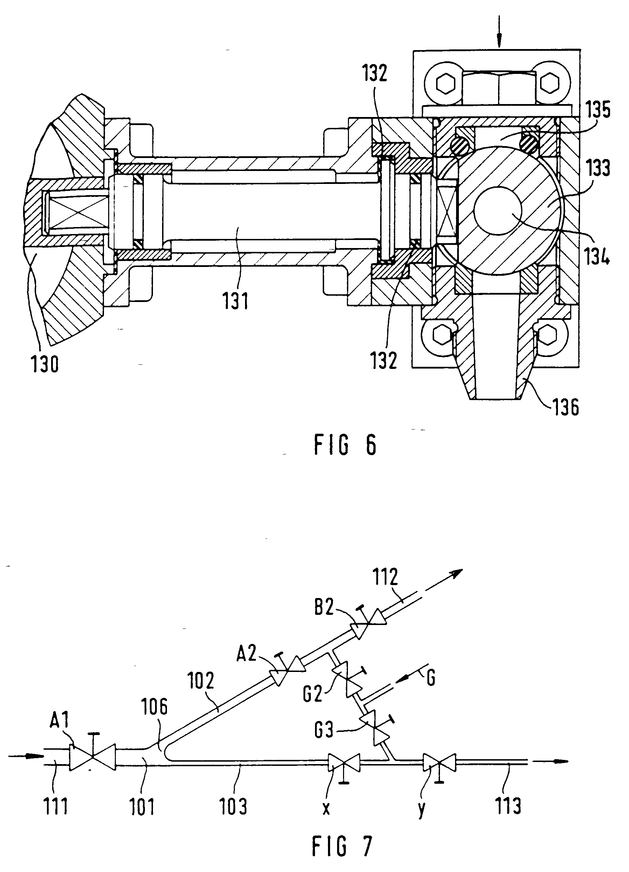

Eine derartige Ausführung zeigt Figur 6, wo mit 137 die Drehachse des Hahnstopfens 133 bezeichnet ist. Der Durchtrittskanal 134 im drehbar gelagerten Hahnstopfen 133 ist vorteilhaft geradlinig und verläuft in der gezeichneten Stellung horizontal, um die seitlich zur Zeichenebene liegenden Anschlüsse für den Leitungszweig 111 und die Teilleitung 112 miteinander zu verbinden. In einer zweiten Stellung verläuft der Durchtrittskanal 133 vertikal und verbindet einen ins Freie mündenden, seitlichen Raum 135 mit der zweiten Teilleitung, die vorteilhaft etwa geradlinig nach unten verläuft und hier als Ausfluß-Stutzen 136 ausgebildet ist. Diese Teilleitung endet oberhalb eines Proben-Auffangbehälters, wobei bei dieser Ausführung ein Druckausgleich zwischen der Fördergas-Zuleitung (offener Raum 135) und dem Proben-Auffangbehälter unter dem Ausflußstutzen 136 sichergestellt ist. Dadurch entleert sich das Pulver im Durchtrittskanal 134 aufgrund seines Eigengewichtes in den Probenbehälter.

Figur 6 zeigt ferner einen Motor 130, der den Hahnstopfen 133 über einen an dichtenden Gleitringen 132 geführten Schaft 131 dreht.

Ein derartiger Hahn 114 zum Sammeln von Pulverproben in einem Proben-Auffangbehälter 120 ist in Figur 2 schematisch angedeutet. Gemäß Figur 3 ist eine Steuereinrichtung vorgesehen, die den Füllstand im Probenbehälter mißt und den Motor 116 zum Drehen des Hahnkükens solange betätigt, bis dem durch die Förderleitung fließenden Pulverstrom die zur Analyse nötige Pulvermenge entnommen ist. Dabei ist ferner mit 123 ein Drehteller dargestellt, auf dem noch weitere Proben-Auffangbehälter 121 angeordnet sind, die nacheinander unter dem Ende der zweiten Teilleitung 113 positioniert werden können, um zu verschiedenen Zeiten verschiedene Pulverproben automatisch zu entnehmen.

Dabei kann das Vorderende der Förderleitung insbesondere mittels einer mechanisch bewegte Teile enthaltende Transporteinrichtung mit dem zu fördernden, einem Abgabebehälter entnommenen Pulver gefüllt werden, wie dies in der gleichzeitig eingereichten Patentanmeldung "Verfahren und Vorrichtung zum Fördern von Pulver von einer Abgabestation zu einer Auffangstation" des gleichen Anmelders beschrieben ist. Insbesondere können Verfahrensvarianten und Vorrichtungsteile verwendet werden, die in den gleichzeitig eingereichten Patentanmeldungen "Verfahren und Vorrichtung zum Fördern von Pulver" und "Vorrichtung zur Pulverförderung" des gleichen Anmelders beschrieben sind. Der Inhalt dieser Patentanmeldungen ist Teil der vorliegenden Erfindung und ihrer Beschreibung.

In der Praxis sind die rechtwinkligen Abzweigungen der Figur 4 für die meisten Pulverströme nicht zulässig. Vielmehr muß ein Leitungszweig einen stumpfen Winkel mit jeder der beiden Teilleitungen umschließen, so daß sich als praktisches Ausführungsbeispiel einer zum Hinterende führenden Weiche die Anordnung nach Figur 7 ergibt. Dabei können vereinfacht meist die beiden Fördergas-Ventile G2 und G3 zu einem einzelnen Ventil G in der Fördergaszuleitung vereint werden.

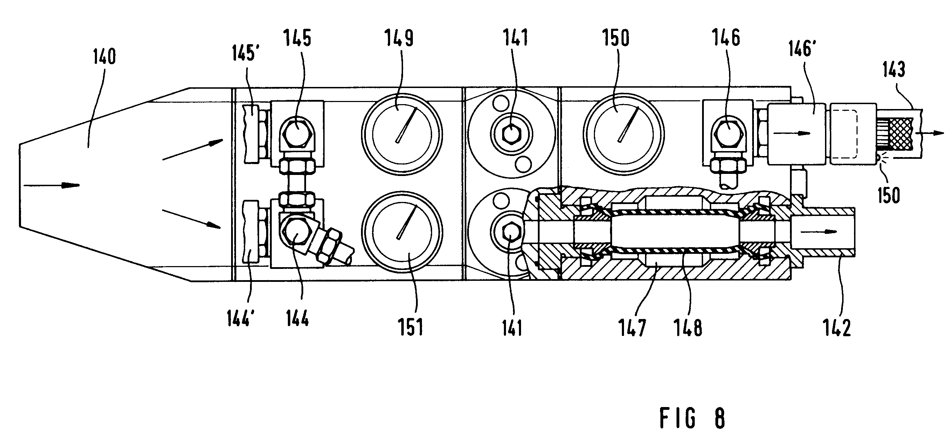

Eine gerätetechnische Ausführung zeigt Figur 8, wobei davon ausgegangen wird, daß diese "Spülweiche" an einem Ort einer Förderleitung angeordnet ist, an dem vorgelagerte Leitungsteile die Funktion des Ventils A1 übernehmen können, so daß Figur 8 nur den Anschluß 140 des Leitungszweiges zeigt. Mit 141 ist die den beiden Teilleitungen 142, 143 zugeordnete Fördergas-Zufuhr gezeigt, deren Fördergas-Ventil nicht erkennbar ist. Die Ventile der beiden jeder Teilleitung zugeordneten Ventilpaare sind druckluftbetätigt und gleich aufgebaut, wobei von den Ventilen 144, 145, 146 nur die Druckluft-Anschlüsse erkennbar sind, während der Längsschnitt durch das vierte Ventile erkennen läßt, daß die entsprechende Teilleitung 142 mittels einer Schlauchmembran 147 durch eine Druckluftkammer 148 geführt ist. Mittels der Druckluft kann die Schlauchmembran zu einem vakuumdichten Verschluß der Teilleitung zusammengedrückt werden. Die Druckluft zu den Kammern der einzelnen Ventile wird durch Steuerelemente 144; 145; 146 gesteuert, wobei eine entsprechende Signallampe 150 den Steuerzustand optisch anzeigt. Ferner sind Manometer 149 erkennbar, mit denen der Druck in der Druckkammer und damit die Funktionsfähigkeit der Ventile kontrolliert werden kann.

Diese Weiche kann ohne konstruktive Änderungen auch in umgekehrter Richtung betrieben werden.

Somit sind betriebssichere und saubere Ab- oder Umschaltungen der Pulverströme möglich, ohne daß ein anderes umständliches Reinigen der Leitungen mit entsprechend langen Unterbrechungen des Förderbetriebs erforderlich wäre.

## Patentansprüche

1. Förderleitung für ein durch einen Fördergasstrom gefördertes Pulver mit einem Anschlußelement für zwei Teilleitungen (112, 113) und einem Anschluß (101) eines weiteren Leitungszweigs (111), wobei der Leitungszweig (111), das Anschlußelement und die erste Teilleitung in einem ersten Betriebszustand eine Verbindung zur Förderung des Pulvers von einem Vorderende zu einem Hinterende herstellen und im Hinterende ein Unterdruck gegenüber dem Druck am Vorderende erzeugbar ist , **dadurch gekennzeichnet**, daß eine Fördergas-Zuleitung (107) für ein Fördergas mit einem gegenüber dem Unterdruck erhöhten Druck zum Verteilerelement führt und das Verteilerelement

   i) in dem ersten Betriebszustand die Fördergas-Zuleitung (107) von der zweiten Teilleitung (113) trennt und den Anschluß (101) des Leitungszweigs (111) über einen Verteilerraum (106) mit der ersten Teilleitung (112) verbindet und

   ii) in einem zweiten Betriebszustand die erste Teilleitung (111) vom Verteilerraum (106) trennt und die Fördergas-Zuleitung (107) über den Verteilerraum (106) mit der zweiten Teilleitung (113) verbindet (Figur 4).

2. Förderleitung nach Anspruch 1, **dadurch gekennzeichnet**, daß der Anschluß des Leitungszweigs eine Absperreinrichtung (A1, B1) aufweist. (Figur 4)

3. Förderleitung nach Anspruch 1 oder 2, **gekennzeichnet** durch einen Hilfsanschluß mit wenigstens einem Fördergas-Ventil (G3), das während des ersten Betriebszustandes im gesperrten Ventilzustand die Fördergas-Zuleitung (107) vom Anschluß (101) des Leitungszweiges, dem Verteilerraum (106) und einem Anschluß (102) der ersten Teilleitung (112) trennt und im geöffneten Betriebszustand die Fördergas-Zuleitung über den Verteilerraum (106) mit dem Anschluß (102) der ersten Teilleitung (112) verbindet. (Figur 4)

4. Förderleitung nach Anspruch 1 oder 2, **gekennzeichnet durch** einen Hilfsanschluß mit wenigstens einem Fördergas-Ventil (G2), das während des zweiten Betriebszustandes geöffnet ist und während eines weiteren Betriebszustandes geschlossen ist und die Fördergas-Zuleitung (107) vom Anschluß (101) des Leitungszweiges, vom Verteilerraum (106) und von der ersten Teilleitung (112) trennt, wobei die zweite Teilleitung (113) über den Verteilerraum (106) mit dem Anschluß (101) des Leitungszweiges (111) verbunden und die erste Teilleitung (112) vom Verteilerraum (106) getrennt sind. (Figur 4)

5. Förderleitung nach der Kombination der Ansprüche 3 und 4, **dadurch gekennzeichnet**, daß die beiden Teilleitungen (112, 113) jeweils über direkt am Verteilerraum (106) angeordnete Schließeinrichtungen (B2, y) an den Verteilerraum (106) anschließbar sind und der Hilfsanschluß (107) direkt in den Verteilerraum (106) einmündet. (Figur 5)

6. Förderleitung nach der Kombination der Ansprüche 3 und 4, **dadurch gekennzeichnet**, daß jeder Teilleitung (112, 113) ein Paar hintereinander angeordneter Ventile (A2, B2; x, y) mit einem dazwischenliegenden Hilfsanschluß (G2, G3) zugeordnet ist und jedes Ventilpaar seine zugeordnete Teilleitung mit dem Verteilerraum verbindet. (Figur 4, 7)

7. Förderleitung für ein durch einen Fördergasstrom gefördertes Pulver mit einem Anschlußelement für zwei Teilleitungen (111, 113) und wenigstens einen weiteren Leitungszweig (112), wobei ein Vorderende (110) mit einem Abgabebehälter und ein auf einem niedrigen Druck liegendes Hinterende (104) mit einem Auffangbehälter über die erste Teilleitung (111), das Anschlußelement (106) und den Leitungszweig (112) miteinander verbunden sind, **dadurch gekennzeichnet**, daß das Anschlußelement einen Verteilerraum (106) mit einem ersten und zweiten verschließbaren Anschluß (A1, y) für die erste und zweite Teilleitung (111, 113), einem weiteren Anschluß (102) für den Leitungszweig (112) und einem Hilfsanschluß (G1) für eine absperrbare Fördergas-Zuleitung (107) enthält, über die pulverfreies Fördergas mit einem gegenüber dem Druck am Hinterende erhöhten Druck durch den Verteilerraum (106) in den zweiten Anschluß (103) oder den weiteren Anschluß (102) einleitbar ist. (Figur 4)

8. Förderleitung nach Anspruch 7, **dadurch gekennzeichnet**, daß beide Teilleitungen (111, 113) von einem Abgabebehälter (105, 110) am Vorderende der Förderleitung kommen, über ein Absperrventil (A1, y) an den Verteilerraum (106) angeschlossen sind und jeweils beim Schließen eines der Absperrventile (A1, y) Fördergas an der Fördergas-Zuleitung (G1, G3) über den Verteilerraum in den weiteren Anschluß (102) einleitbar ist. (Figur 4)

9. Förderleitung nach Anspruch 7, **dadurch gekennzeichnet**, daß beide Teilleitungen (112, 113) zu mindestens einem Auffangbehälter am Hinterende führen und über jeweils ein Absperrventil (B2, y) an den Verteilerraum (106) anschließbar sind, und daß jeweils beim Schließen eines der Absperrventile (B2, y) Fördergas aus der Fördergaszuleitung (G2, G3) über den Verteilerraum (106) in den weiteren Anschluß (101) einleitbar ist. (Figur 4)

10. Förderleitung nach einem der Ansprüche 7 bis 9, **dadurch gekennzeichnet**, daß am Anschluß der ersten und zweiten Teilleitung (112, 113) jeweils ein Paar über eine Gaseinleitung (G2, G3) miteinander verbundener Absperrventile (A2, B2; x, y) vorgesehen ist und der Hilfsanschluß die Fördergas-Zuleitung (G) über mindestens ein Hilfssperrventil (G2, G3) mit jeder Gaseinleitung verbindet. (Figur 7)

11. Förderleitung nach einem der Ansprüche 7 bis 10, **gekennzeichnet durch** eine optische Anzeige (150) der Ventilzustände. (Figur 8)

12. Förderleitung nach Anspruch 7, **dadurch gekennzeichnet**, daß der Verteilerraum (106) als Hohlraum eines in einer Hahnbuchse drehbar gelagerten Hahnstopfens und mindestens die Anschlüsse der ersten und zweiten Teilleitung (112, 113) als Bohrungen in der Hahnbuchse ausgebildet sind, die durch Drehen des Hahnstopfens freigegeben oder verschlossen werden. (Figur 5)

13. Förderleitung nach Anspruch 12, **dadurch gekennzeichnet**, daß die Zweigleitung zum Vorderende (29), die erste Teilleitung (30) zum Hinterende, die zweite Teilleitung (113) zu einem Proben-Auffanggefäß (120) führt, daß auch der weitere Anschluß und der Hilfsanschluß als Bohrungen in der Hahnbuchse (114) ausgebildet sind, und daß der Hohlraum von einem Durchtrittskanal gebildet ist, der in einer ersten Stellung des Hahnstopfens den ersten Anschluß mit dem weiteren Anschluß, in einer zweiten Stellung den zweiten Anschluß mit dem Hilfsanschluß verbindet. (Figur 2)

14. Förderleitung nach Anspruch 13, **dadurch gekennzeichnet**, daß der Durchtrittskanal (134) in der ersten Stellung horizontal, in der zweiten Stellung vertikal verläuft. (Figur 6)

**15.** Förderleitung nach Anspruch 14, **dadurch gekennzeichnet**, daß die zweite Teilleitung (113) ungefähr geradlinig nach unten verläuft und oberhalb des Proben-Auffangbehälters endet und zwischen Proben-Auffangbehälter und Förder-Gaszuleitung ein Druckausgleich sichergestellt ist. (Figur 3)

**16.** Förderleitung nach einem der Ansprüche 13 bis 15, **gekennzeichnet durch** einen Motor (116) zum Drehen des Hahnstopfens und eine Steuereinrichtung (122) durch die der Hahnstopfen solange gedreht wird, bis im Proben-Auffangbehälter ein gewünschter Füllstand erreicht ist. (Figur 3)

**17.** Förderleitung nach einem der Ansprüche 13 bis 16, **gekennzeichnet durch** einen Drehteller (123) mit mehreren nacheinander unter dem Ende der zweiten Teilleitung (113) positionierbaren Proben-Auffangbehältern (121). (Figur 3)

**18.** Anlage zur Pulverförderung mit
a) einem Abgabebehälter (63) mit einem an eine erste Bohrung einer Hahnbuchse angeschlossenen Leitungszweig und Mitteln (67) zum Zuführen von Fördergas und Pulver in den Leitungszweig,
b) einer etwa vertikalen, nach unten zu einem Probengefäß führenden zweiten Bohrung in der Hahnbuchse,
c) einer der ersten Bohrung diametral entgegengesetzten dritten Bohrung in der Hahnbuchse, einer an die dritte Bohrung angeschlossenen Teilleitung (65) zu einer Sammelkammer (76) eines Auffangbehälters (85) und einer über ein Pulverfilter (74) an die Sammelkammer angeschlossenen Saugpumpe (72) und
d) einem in der Hahnbuchse drehbar gelagerten Hahnstopfen mit einem ungefähr geradlinigen Durchtrittskanal, der in einer ersten Stellung die erste mit der dritten Bohrung und in einer zweiten Stellung die zweite Bohrung mit einer Einlaßöffnung in der Hahnbuchse verbindet. (Figur 3)

**19.** Anlage zur Pulverförderung mit
a) mindestens einem Abgabebehälter (26) mit einem Ansaugraum (29), einer in den Ansaugraum mündenden Fördergas-Zuleitung (28) und Mitteln (32) zum Einfüllen von Pulver in den Ansaugraum (29),
b) einem Auffangbehälter (43) mit einer Sammelkammer (21) und einer an die Sammelkammer über ein Pulverfilter (22) angeschlossenen Saugpumpe (24),
c) mindestens einem Zusatz-Auffangbehälter mit einer über ein Pulverfilter daran angeschlossenen Zusatzpumpe und
d) einem vom Abgabebehälter (26) kommenden Leitungszweig (30) zu einer zwei hintereinander geschaltete Absperrventile (x, y) enthaltenden ersten Teilleitung zur Sammelkammer und einer zwischen Leitungszweig und erster Teilleitung abzweigenden, zwei hintereinander geschaltete Absperrventile (A2, B2) enthaltenden zweiten Teilleitung zum Zusatzbehälter und zwei jeweils zwischen den beiden Absperrventilen in die Teilleitungen mündende Öffnungen einer absperrbaren Fördergas-Zuleitung (G2, G3). (Figur 2)

**Claims**

1. A conveying line for a powder conveyed by a conveying gas flow, comprising a connecting element for two sub-lines (112, 113) and a terminal (101) of a further line branch (111), the line branch (111), the connecting element and the first sub-line producing a connection in a first operating state for conveying the powder from the front end to a rear end and it being possible to generate an underpressure in the rear end relative to the pressure at the front end, characterised in that a conveying gas supply line (107) for a conveying gas with an increased pressure relative to the underpressure leads to a distribution element and the distribution element
   i) in a first operating state disconnects the conveying gas supply line (107) from the second sub-line (113) and connects the terminal (101) of the line branch (111) via a distribution chamber (106) to a first sub-line (112) and
   ii) in a second operating state disconnects the first sub-line (111) from the distribution chamber (106) and connects the conveying gas supply line (107) via the distribution chamber (106) to the second sub-line (113). (Figure 4)

2. A conveying line according to claim 1, characterised in that the terminal of the line branch comprises a cut-off device (A1, B1). (Figure 4)

3. A conveying line according to claim 1 or 2, characterised by an auxiliary terminal with at least one conveying gas valve (G3), which during the first operating state in its locked valve state disconnects the conveying gas supply line (107) from the terminal (101) of the line branch, the distribution chamber (106) and a terminal (102) of the first sub-line (112) and in the open operating state connects the conveying gas supply line via the distribution chamber (106) to the terminal (102) of the first sub-line (112). (Figure 4)

4. A conveying line according to claim 1 or 2, characterised by an auxiliary terminal with at least one conveying gas valve (G2), which during the second operating state is open and during a further operating state is closed and disconnects the conveying gas supply line (107) from the terminal (101) of the line branch, from the distribution chamber (106) and from the first sub-line (112), the second sub-line (113) being connected via the distribution chamber (106) to the terminal (101) of the line branch (111) and the first sub-line (112) being disconnected from the distribution chamber (106). (Figure 4)

5. A conveying line according to the combination of claims 3 and 4, characterised in that both sub-lines (112, 113) can be connected to the distribution chamber (106) via closing devices (B2, y) arranged directly on the distribution chamber (106) and the auxiliary terminal (107) opens directly into the distribution chamber (106). (Figure 5)

6. A conveying line according to the combination of claims 3 and 4, characterised in that a pair of valves (A2, B2; x, y) arranged in series with an interposed auxiliary terminal (G2, G3) is associated with each sub-line (112, 113) and each valve pair connects its associated sub-line to the distribution chamber. (Figures 4, 7)

7. A conveying line for a powder conveyed by a conveying gas flow comprising a connecting element for two sub-lines (111, 113) and at least one further line branch (112), a front end (110) with an output receptacle and a rear end (104) with a receiving receptacle lying at a low pressure being connected to one another via the first sub-line (111), the connecting element (106) and the line branch (112), characterised in that the connecting element comprises a distribution chamber (106) with a first and second closable terminal (A1, y) for the first and second sub-line (111, 113), a further terminal (102) for the line branch (112) and an auxiliary terminal (G1) for a closable conveying gas supply line (107), via which powder-free conveying gas can be introduced through the distribution chamber (106) into the second terminal (103) or further terminal (102) at a higher pressure than the pressure existing at the rear end. (Figure 4)

8. A conveying line according to claim 7, characterised in that both sub-lines (111, 113) extend from an output receptacle (105, 110) at the front end of the conveying line, are connected via a cut-off valve (A1, y) to the distribution chamber (106) and with the closure of one of the cut-off valves (A1, y) conveying gas can be introduced from the conveying gas supply line (G1, G3) via the distribution chamber into the further terminal (102). (Figure 4)

9. A conveying line according to claim 7, characterised in that both sub-lines (112, 113) lead to at least one receiving receptacle at the rear end and can be connected in each case via a cut-off valve (B2, y) to the distribution chamber (106), and with the closure of one of the cut-off valves (B2, y) conveying gas can be introduced from the conveying gas supply line (G2, G3) via the distribution chamber (106) into the further terminal (101). (Figure 4)

10. A conveying line according to one of claims 7 to 9, characterised in that a pair of cut-off valves (A2, B2; x, y), which are connected to one another via a gas inflow (G2, G3), is provided in each case at the terminal of the first and second sub-line (112, 113), and the auxiliary terminal connects the conveying gas supply line (G) via at least one auxiliary cut-off valve (G2, G3) to each gas inflow. (Figure 7)

11. A conveying line according to one of claims 7 to 10, characterised by an optical display (150) of the valve states. (Figure 8)

12. A conveying line according to claim 7, characterised in that the distribution chamber (106) is constructed as a cavity of a stopcock plug rotatably mounted in a cock bushing and at least the terminals of the first and second sub-lines (112, 113) are constructed as bores in the stopcock plug, which bores can be released or closed by rotating the stopcock plug. (Figure 5)

13. A conveying line according to claim 12, characterised in that the branch line leads to the front end (29), the first sub-line (30) leads to the rear end, the second sub-line (113) leads to a sample receiving receptacle (120), the further terminal and the auxiliary terminal are also constructed as bores in the cock bushing (114), and the cavity is formed by a through duct, which in a first position of the stopcock plug connects the first terminal to the further terminal and in a second position connects the second terminal to the auxiliary terminal. (Figure 2)

14. A conveying line according to claim 13, characterised in that, in the first position, the through duct (134) extends horizontally and in the second position extends vertically. (Figure 6)

15. A conveying line according to claim 14, characterised in that the second sub-line (113) extends approximately linearly downwards and ends above the sample receiving receptacle and a pressure balance is ensured between the sample receiving receptacle and the conveying gas supply line. (Figure 3)

16. A conveying line according to one of claims 13 to 15, characterised by a motor (116) for rotating the stopcock plug and a control device (122), by means of which the stopcock plug is rotated until a desired filling level is reached in the sample receiving receptacle. (Figure 5)

17. A conveying line according to one of claims 13 to 16, characterised by a rotary disk (123) with a plurality of sample receiving receptacles (121), which can be positioned in turn beneath the end of the second sub-line (113). (Figure 3)

18. Arrangement for conveying powder comprising
    a) an output receptacle (63) with a line branch connected to a first bore of a cock bushing and means (67) for supplying conveying gas and powder into the line branch,
    b) a second bore in the cock bushing which extends approximately vertically downwards into a sample receptacle,
    c) a third bore in the cock bushing, which diametrically opposes the first bore, a sub-line (65) connected to the third bore and leading to a collecting chamber (76) of a receiving receptacle (85) and a suction pump (72) connected via a powder filter (74) to the collecting chamber, and
    d) a stopcock plug rotatably mounted in the cock bushing and comprising an approximately linear through duct, which in a first position connects the first bore with the third bore and in a second position connects the second bore with an inflow aperture into the cock bushing. (Figure 3)

19. Arrangement for conveying powder comprising

a) at least one output receptacle (26) with a suction chamber (29), a conveying gas supply line (28) opening into the suction chamber and means (32) for filling powder into the suction chamber (29),
b) a receiving receptacle (43) with a collecting chamber (21) and a suction pump (24) connected to the collecting chamber via a powder filter (22),
c) at least one additional receiving receptacle with an additional pump connected thereto via a powder filter and
d) a line branch (30) extending from the output receptacle (26) and leading to a first sub-line comprising two cut-off valves (x, y) arranged in series and leading to the collecting chamber and a second sub-line, which branches off between the line branch and first sub-line, leads to the additional receptacle and comprises two cut-off valves (A2, B2) connected in series and two openings of a closable conveying gas supply line (G2, G3) opening into the sub-lines between the two cut-off valves in each case. (Figure 2)

**Revendications**

1. Conduite de transport d'une poudre entraînée par un courant de gaz d'entraînement, comportant un élément de raccordement de deux conduites partielles (112, 113) et un raccord (101) d'une autre branche de conduite (111), la branche de conduite (111), l'élément de raccordement et la première conduite partielle établissant, dans un premier état de fonctionnement, une communication pour l'entraînement de la poudre d'une extrémité en amont à une extrémité en aval, et une dépression par rapport à la pression régnant à l'extrémité en amont pouvant être produite à l'extrémité en aval, caractérisée par le fait qu'une conduite (107) d'amenée d'un gaz d'entraînement ayant une pression plus haute par rapport à la dépression, mène à l'élément de répartition et que

    i) dans un premier état de fonctionnement, l'élément de répartition sépare la conduite (107) d'amenée du gaz d'entraînement de la seconde conduite partielle (113) et met le raccord (101) de la branche de conduite (111) en communication avec la première conduite partielle (112) par l'intermédiaire d'une chambre de répartition (106), et

    ii) dans un second état de fonctionnement, sépare la première conduite partielle (111) de la chambre de répartition (106) et met la conduite (107) d'amenée du gaz d'entraînement en communication avec la seconde conduite partielle (113), par l'intermédiaire de la chambre de répartition (106) (figure 4).

**2.** Conduite de transport suivant la revendication 1, caractérisée par le fait que le raccord de la branche de conduite comporte un dispositif d'arrêt (A1,B1) (figure 4).

**3.** Conduite de transport suivant la revendication 1 ou 2, caractérisée par un raccord auxiliaire comportant au moins une vanne (G3) pour le gaz d'entraînement, qui, dans le premier état de fonctionnement, alors que la vanne est à l'état d'arrêt, sépare la conduite (107) d'amenée du gaz d'entraînement du raccord (101) de la branche de conduite, de la chambre de répartition (106) et d'un raccord (102) de la première conduite partielle (112), et, dans l'état de fonctionnement ouvert, met la conduite d'amenée du gaz d'entraînement en communication avec le raccord (102) de la première conduite partielle (112), par l'intermédiaire de la chambre de répartition (106) (Figure 4).

**4.** Conduite de transport suivant la revendication 1 ou 2, caractérisée par un raccord auxiliaire comportant au moins une vanne (G2) pour le gaz d'entraînement, qui est ouverte pendant le second état de fonctionnement et est fermée pendant un autre état de fonctionnement et sépare la conduite (107) d'amenée du gaz d'entraînement du raccord (101) de la branche de conduite, de la chambre de répartition (110) et de la première conduite partielle (112), la seconde conduite partielle (113) communiquant, par l'intermédiaire de la chambre de répartition (106), avec le raccord (101) de la branche de conduite (111) tandis que la première conduite partielle (112) est séparée de la chambre de répartition (106). (Figure 4).

**5.** Conduite de transport suivant la combinaison des revendications 3 et 4, caractérisée par le fait que les deux conduites partielles (112,113) peuvent être raccordées à la chambre de répartition (106) respectivement par l'intermédiaire de dispositifs de fermeture (B2,y) disposés directement dans la chambre de répartition (106) et que le raccord auxiliaire (107) débouche directement dans la chambre de répartition (106). (Figure 5).

**6.** Conduite de transport suivant la combinaison des revendications 3 et 4, caractérisée par le fait qu'à chaque conduite partielle (112,113) est associé un couple de vannes (A2,B2;x,y) en série et comportant un raccord auxiliaire intercalé (G2,G3) et que chaque couple de vannes met sa conduite partielle associée en communication avec la chambre de répartition. (Figures 4, 7).

**7.** Conduite de transport d'une poudre entraînée par un courant de gaz d'entraînement et comportant un élément de raccordement pour deux conduites partielles (111,113) et au moins une autre branche de conduite (112), une extrémité en amont (110) comportant un récipient d'alimentation et une extrémité en aval (104) sous une basse pression et comportant un récipient de collecte communiquant entre elles par l'intermédiaire de la première conduite partielle (111), de l'élément de raccordement (106) et de la branche de conduite (112), caractérisée par le fait que l'élément de raccordement comporte une chambre de répartition (106) ayant des premier et second raccords (A1,y) pouvant être fermés, pour les première et seconde conduites partielles (111,113), un autre raccord (102) pour la branche de conduite (112) et un raccord auxiliaire (G1) pour une conduite (107) d'amenée du gaz d'entraînement, qui peut être fermée et par laquelle du gaz d'entraînement sans poudre peut être introduit sous une pression plus haute que la pression qui règne à l'extrémité en aval, en passant par la chambre de répartition (106) dans le second raccord (103) ou dans l'autre raccord (102). (Figure 4).

**8.** Conduite de transport suivant la revendication 7, caractérisée par le fait que les deux conduites partielles (111,113) arrivent d'un récipient d'alimentation (105,110) à l'extrémité en amont de la conduite de transport, sont raccordés à la chambre de répartition (106) par l'intermédiaire d'une vanne d'arrêt (A1,y) et que, respectivement lors de la fermeture de l'une des vannes d'arrêt (A1,y), du gaz d'entraînement présent dans la conduite (G1,G3) d'amenée du gaz d'entraînement peut être introduit, par l'intermédiaire de la chambre de répartition, dans l'autre raccord (102). (Figure 4).

**9.** Conduite de transport suivant la revendication 7, caractérisée par le fait que les deux conduites partielles (112,113) mènent à au moins un récipient de collecte à l'extrémité en aval et peuvent être raccordées à la chambre de répartition (106) par l'intermédiaire de vannes respectives d'arrêt (B2,y), et que respectivement lors de la fermeture de l'une des vannes d'arrêt (B2,y), du gaz d'entraînement provenant de la conduite (G2, G3) d'amenée du gaz d'entraînement peut être introduit, par l'intermédiaire de la chambre de répartition (106), dans l'autre raccord (101). (Figure 4).

10. Conduite de transport suivant l'une des revendications 7 à 9, caractérisée par le fait qu'au raccord des première et seconde conduites partielles (112, 113), il est prévu respectivement un couple de vannes d'arrêt (A2, B2; x, y) communiquant entre elles par l'intermédiaire d'une entrée de gaz (G2,G3) et que le raccord auxiliaire met la conduite (G1) d'amenée de gaz d'entraînement en communication avec chaque entrée de gaz par l'intermédiaire d'au moins une vanne d'arrêt auxiliaire (G2,G3). (Figure 7).

11. Conduite de transport suivant l'une des revendications 7 à 10, caractérisée par un dispositif (150) d'affichage visuel des états des vannes. (Figure 8).

12. Conduite de transport suivant la revendication 7, caractérisée par le fait que la chambre de répartition (106) est réalisé sous la forme d'une cavité d'un boisseau monté rotatif dans un corps de robinet, et au moins les raccords des première et seconde conduites partielles (112,113) sont agencés sous la forme de trous situés du corps de robinet, qui sont dégagés ou fermés par rotation du boisseau. (Figure 5).

13. Conduite de transport suivant la revendication 12, caractérisée par le fait que la conduite de dérivation mène à l'extrémité en amont (29), que la première conduite partielle (30) mène à l'extrémité en aval, et que la seconde conduite partielle (113) mène à un récipient (120) de collecte d'échantillons, que l'autre raccord et le raccord auxiliaire sont aussi agencés sous la forme de trous du corps de robinet (114) et que la cavité et formée par un canal de traversée, qui, lorsque le boisseau est dans une première position, relie le premier raccord à l'autre raccord et, dans une seconde position, relie le second raccord au raccord auxiliaire. (Figure 2).

14. Conduite de transport suivant la revendication 13, caractérisée par le fait que, dans la première position, le canal de traversée (134) s'étend horizontalement et que dans la seconde position il s'étend verticalement. (Figure 6).

15. Conduite de transport suivant la revendication 14, caractérisée par le fait que la seconde conduite partielle (113) s'étend vers le bas à peu près en ligne droite et se termine au-dessus du récipient de collecte d'échantillons et une compensation de pression est assurée entre le récipient de collecte d'échantillons et la conduite d'amenée de gaz d'entraînement. (Figure 3).

16. Conduite de transport suivant l'une des revendications 13 à 15, caractérisée par un moteur (116) destiné à faire tourner le boisseau, et un dispositif de commande (122) qui fait tourner le boisseau jusqu'à ce qu'un niveau de remplissage souhaité soit atteint dans le récipient de collecte d'échantillons. (Figure 3).

17. Conduite de transport suivant l'une des revendications 13 à 16, caractérisée par un plateau rotatif (123) comportant plusieurs récipients de collecte d'échantillons (121), qui peuvent être mis successivement au-dessous de l'extrémité de la seconde conduite partielle (113). (Figure 3).

18. Installation de transport de poudre, comportant
a) un récipient d'alimentation (63) comportant une branche de conduite raccordée à un premier trou d'un corps de robinet, et des moyens (67) pour amener du gaz d'entraînement et une poudre dans la branche de conduite,
b) un deuxième trou approximativement vertical, qui débouche vers le bas dans un récipient à échantillons et qui est ménagé dans le corps de robinet;
c) un troisième trou, qui est diamétralement opposé au premier trou et est ménagé dans le corps de robinet, une conduite partielle (65) raccordée au troisième trou et aboutissant à une chambre de collecte (67) d'un récipient de collecte (85), et une pompe aspirante (72) raccordée à la chambre de collecte par l'intermédiaire d'un filtre à poudre (74), et
d) un boisseau monté rotatif dans le corps de robinet et comportant un canal de traversée approximativement rectiligne et qui, dans une première position, relie le premier trou au troisième trou et, dans une seconde position, relie le deuxième trou à une ouverture d'entrée ménagée dans le corps de robinet. (Figure 3).

19. Installation de transport de poudre, comportant
a) au moins un récipient d'alimentation (26) ayant une chambre d'aspiration (22), une conduite (28) d'amenée du gaz d'entraînement, qui débouche dans la chambre d'aspiration, et des moyens (32) pour introduire de la poudre dans la chambre d'aspiration (29),

b) un récipient de collecte (43) ayant une chambre de collecte (21) et une pompe aspirante (24) raccordée à la chambre de collecte par l'intermédiaire d'un filtre à poudre (22),

c) au moins un récipient de collecte d'additif comportant une pompe d'additif, qui est raccordée à ce récipient par l'intermédiaire d'un filtre à poudre, et

d) une branche de conduite (30) qui vient du récipient d'alimentation (26) et aboutit à une première conduite partielle, qui comporte deux vannes d'arrêt (x,y) en série et qui conduit à la chambre de collecte, et une seconde conduite partielle qui s'étend en dérivation entre la branche de conduite et la première conduite partielle et comporte deux vannes d'arrêt (A2,B2) en série et aboutit au récipient d'additif, et deux ouvertures, qui débouchent respectivement entre les deux vannes d'arrêt dans les conduites partielles, d'une conduite (G2,G3) d'amenée du gaz d'entraînement, qui peut être fermée. (Figure 2).

FIG 1

FIG 2

FIG 3

FIG 4

FIG 5

FIG 6

FIG 7

FIG 8

EP 0 526 805 B1